# EUROPÄISCHE PATENTSCHRIFT

(11) **EP 0 811 010 B1**
(45) Veröffentlichungstag und Bekanntmachung des Hinweises auf die Patenterteilung: **22.08.2001**
(21) Anmeldenummer: 96904768.7
(22) Anmeldetag: 14.02.1996
(51) Int. Cl.: C07F 17/00, C08F 10/00, C07F 9/54

(54) **METALLOCENKOMPLEXE MIT KATIONISCHER BRÜCKE**
METALLOCENE COMPLEXES WITH CATIONIC BRIDGES
COMPLEXES METALLOCENES A PONTS CATIONIQUES

(30) Priorität: 24.02.1995 DE 19506557
(43) Veröffentlichungstag der Anmeldung: 10.12.1997
(73) Patentinhaber: BASF AKTIENGESELLSCHAFT, 67056 Ludwigshafen (DE)
(72) Erfinder: FISCHER, David, D-67161 Gönnheim (DE); LANGHAUSER, Franz, D-67098 Bad Dürkheim (DE); SCHWEIER, Günther, D-67159 Friedelsheim (DE); BRINTZINGER, Hans-Herbert, CH-8274 Taegerswilen (CH); LEYSER, Nadine, D-78467 Konstanz (DE)
(86) Internationale Anmeldenummer: EP9600619
(87) Internationale Veröffentlichungsnummer: WO9626211

(56) Entgegenhaltungen:
- EP-A- 0 498 675
- ORGANOMETALLICS (ORGND7,02767333);88; VOL.7 (11); PP.2285-8, UNIV. MISSOURI-ST. LOUIS;DEP. CHEM.; ST. LOUIS; 63121; MO; USA (US), XP000573057 ANDERSON G K*** ET AL: "Preparation of phenylplatinum-zirconium complexes with Ph2PC5H4 or PhP(C5H4)2 bridging ligands and their reactions with carbon monoxide" in der Anmeldung erwähnt
- J. ORGANOMET. CHEM. (JORCAI,0022328X);83; VOL.243 (4); PP.461-7, UNIV. ESSEX;DEP. CHEM.; COLCHESTER/ESSEX; CO4 3SQ; UK (GB), XP002005512 CLEMANCE M*** ET AL: "Moessbauer studies on ferrocene complexes. VII. Structure and reactions of [1]ferrocenophanes"
- MONATSHEFTE FUR CHEMIE, Bd. 114, Nr. 2, 1983, WIEN AT, Seiten 243-247, XP002005513 H. KÖPF: "Das erste (1)Titanocenophan mit Phosphor-Brücke"
- ZEITSCHRIFT FUR NATURFORSCHUNG, TEIL B: ANORGANISCHE CHEMIE, ORGANISCHE CHEMIE, Bd. 46, Nr. 5, 1991, TUBINGEN DE, Seiten 647-649, XP002005514 N. KLOURAS: "PhAs(c5h4)2TiCl2: Das erste Arsen-überbrückte Titanocenophan"
- J. AM. CHEM. SOC. (JACSAT,00027863);81; VOL.103 (18); PP.5572-3, UNIV. TEXAS;DEP. CHEM.; AUSTIN; 78712; TX; USA, XP002005515 BAXTER S G*** ET AL: "Pentamethylcyclopentadienyl-substituted phosphorus and arsenic cations: evidence for multihapto bonding between Group 5A elements and carbocyclic ligands"

## Beschreibung

Die vorliegende Erfindung betrifft Metallocenkomplexe der allgemeinen Formel I 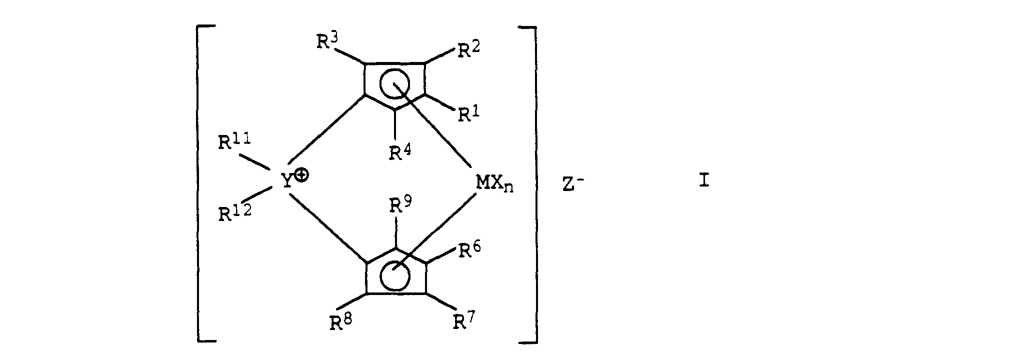 in der die Substituenten folgende Bedeutung haben:
- M: ein Metall aus der III., IV., V. oder VI. Nebengruppe des Periodensystems der Elemente oder ein Metall aus der Gruppe der Lanthaniden,
- X: Fluor, Chlor, Brom, Iod, Wasserstoff, C₁- bis C₁₀-Alkyl, C₆- bis C₁₅-Aryl oder -OR⁵,
- wobei R⁵: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹ bis R⁴ und R⁶ bis R⁹: Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
- R¹⁰: C₁- bis C₁₀-Alkyl, C₆- bis C₁₅-Aryl oder C₃- bis C₁₀-Cycloalkyl,
- Y: Stickstoff, Phosphor, Arsen, Antimon oder Wismut,
- R¹¹, R¹²: Wasserstoff, C₁- bis C₁₀-Alkyl, C₃- bis C₁₀-Cycloalkyl oder C₆- bis C₁₅-Aryl,
- n: 0, 1 oder 2 und
- Z⁻: Halogenide, Carboxylate, monosubstituierte Sulfonate, Borate oder Alkoholate.

Weiterhin betrifft die vorliegende Erfindung Ligandensysteme der allgemeinen Formel II 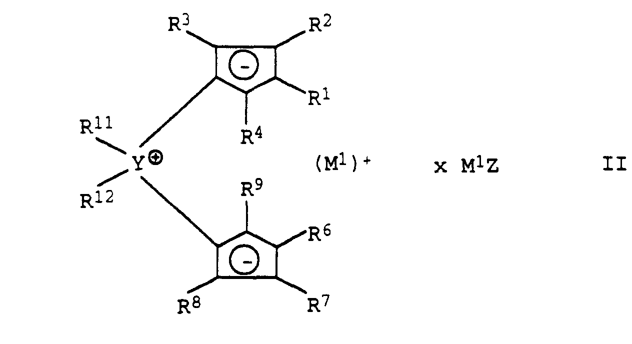 sowie Verfahren zur Herstellung derartiger Metallocenkomplexe I und Ligandensysteme II, die Verwendung der Ligandensysteme II zur Herstellung der Metallocenkomplexe I sowie die Verwendung der Metallocenkomplexe I als Katalysatoren zur Polymerisation von Alkenen.

Verbrückte Metallocenkomplexe, bei denen Elemente der IV. Hauptgruppe des Periodensystems der Elemente als Brücke fungieren sind bekannt, beispielsweise aus der EP-A 344 887 und finden als Katalysatoren für die Polymerisation von Alkenen Verwendung.

Die Verbrückung ist dabei jedoch auf neutrale Brückenatome ohne nachträgliche Funktionalisierbarkeit direkt am verbrückenden Atom beschränkt. Weiterhin besteht nicht die Möglichkeit einer elektronischen Beeinflussung des Ligandsystems durch das Einführen einer Ladung direkt in der Brücke.

Aus G.K. Anderson et al., Organometallics 7 (1988), S. 2285-2288 ist die Einführung von Phosphor als verbrückendes Element zwischen zwei Cyclopentadienylliganden bekannt. Ch. Qian et al., J. Chem. Soc. Dalton Trans. (1993), S. 3441-3445 und Ch. Qian et al., J. Organomet. Chem. 445 (1993), S. 79-84 beschreiben Stickstoff als Brücke in Metallocenkomplexen. Nachteilig hierbei ist jedoch, daß das Brückenelement in Wechselwirkung mit dem Metall des Metallocenkomplexes oder mit anderen koordinativ ungesättigten Substraten tritt.

Aufgabe der vorliegenden Erfindung war es daher, Metallocenkomplexe zur Verfügung zu stellen, die die genannten Nachteile nicht aufweisen und die insbesondere eine sehr variable Gestaltung und gegebenenfalls Funktionalisierung direkt am verbrückenden Atom ermöglichen.

Demgemäß wurden die eingangs definierten Metallocenkomplexe I gefunden.

Außerdem wurden Ligandensysteme II gefunden sowie Verfahren zur Herstellung derartiger Metallocenkomplexe I und Ligandensysteme II, die Verwendung der Ligandensysteme II zur Herstellung der Metallocenkomplexe I sowie die Verwendung der Metallocenkomplexe I als Katalysatoren zur Polymerisation von Alkenen.

Von den erfindungsgemäßen Metallocenkomplexen der allgemeinen Formel I 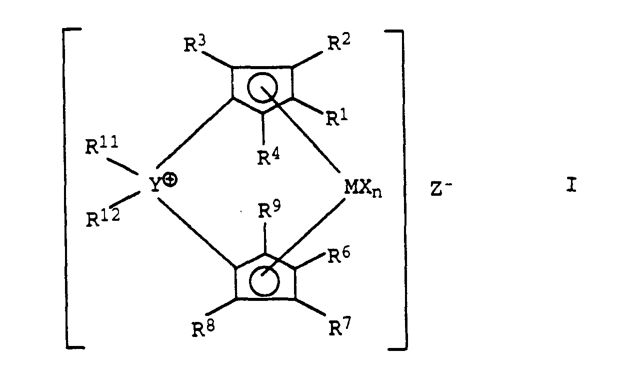 sind diejenigen bevorzugt, in denen die Substituenten folgende Bedeutung haben:
- M: ein Metall aus der IV. Nebengruppe des Periodensystems der Elemente, also Titan, Zirkonium oder Hafnium, oder ein Metall aus der Gruppe der Lanthaniden, insbesondere jedoch Zirkonium oder Hafnium,
- X: Halogen, insbesondere Chlor, oder C₁- bis C₁₀-Alkyl, insbesondere C₁- bis C₄-Alkyl, wobei bei mehreren Resten X diese auch verschieden sein können,
- R¹ bis R⁴ und R⁶ bis R⁹: Wasserstoff, C₁- bis C₁₀-Alkyl, C₆- bis C₁₅-Aryl, insbesondere lineares oder verzweigtes C₁- bis C₆-Alkyl oder wobei zwei benachbarte Reste gemeinsam für 4 bis 12 C-Atome aufweisende cyclische Gruppen stehen,
- Y: Stickstoff oder Phosphor und
- R¹¹, R¹²: Wasserstoff, C₁- bis C₁₀-Alkyl, C₆- bis C₁₅-Aryl, insbesondere lineares oder verzweigtes C₁- bis C₄-Alkyl und vorzugsweise sind die beiden Reste R¹¹ und R¹² gleich.

Besonders bevorzugt sind Metallocenkomplexe I, die symmetrisch aufgebaut sind, in denen also R¹ und R⁶, R² und R⁷, R³ und R⁸ sowie R⁴ und R⁹ die gleiche Bedeutung haben.

Das Anion Z- kann prinzipiell beliebig gewählt werden, Halogenide, insbesondere Jodid, Carboxylate, insbesondere halogenierte Carboxylate wie Trifluoracetat, monosubstituierte Sulfonate, insbesondere arylsubstituierte Sulfonate wie p-Toluolsulfonat, Borate, insbesondere Phenylborate wie Tetra-kis-pentafluorphenylborate oder Methyl-tris-pentafluorphenylborat sowie Alkoholate, insbesondere sterisch aufwendig substituierte Alkoholate wie Isopropanolate oder tert.-Butanolate haben sich als besonders geeignet erwiesen.

Besonders bevorzugte Metallocenkomplexe I sind:
[P,P-Diphenyl-1,1'-phosphoniumdiylbis(2-methyl-4-tert.butylcyclopentadienyl)zirkondichlorid]jodid,
[P-Methyl-P-phenyl-1,1'-phosphoniumdiylbis(2-methyl-4-tert.butylcyclopentadienyl)zirkondichlorid]jodid,
[P,P-Dimethyl-1,1'-phosphoniumdiylbis(2-methylindenyl)zirkondichlorid]jodid,
[P,P-Diphenyl-1,1'-phosphoniumdiylbis(2-methylindenyl)zirkondichlorid]jodid,
[P-Methyl-P-phenyl-1,1'-phosphoniumdiylbis(2-methylindenyl)zirkondichlorid]jodid,
[P,P-Dimethyl-1,1'-phosphoniumdiylbis(2-methylbenzindenyl)zirkondichlorid]jodid,
[P,P-Diphenyl-1,1'-phosphoniumdiylbis(2-methylbenzindenyl)zirkondichlorid]jodid,
[P-Methyl-P-phenyl-1,1'-phosphoniumdiylbis(2-methylbenzindenyl)zirkondichlorid]jodid,
[P,P-Dimethyl-1,1'-phosphoniumdiylbis(2-methylbenzindenyl)hafniumdichlorid]jodid,
[P,P-Dimethyl-1,1'-phosphoniumdiylbis(2-methylbenzindenyl)zirkondichlorid]p-toluolsulfonat,
[P,P-Dimethyl-1,1'-phosphoniumdiylbis(2-methylbenzindenyl)zirkondichlorid]tetrakis-pentafluorophenylborat,
[P,P-Dimethyl-1,1'-phosphoniumdiyl(cyclopentadienyl)(fluorenyl)zirkondichlorid]jodid und
[P,P-Dimethyl-1,1'-phosphoniumdiylbis(2-methyl-4-tert.butylcyclopentadienyl)-zirkondichlorid]jodid.

Die Herstellung der erfindungsgemäßen Metallocenkomplexe I kann so erfolgen, daß die Ligandensysteme II 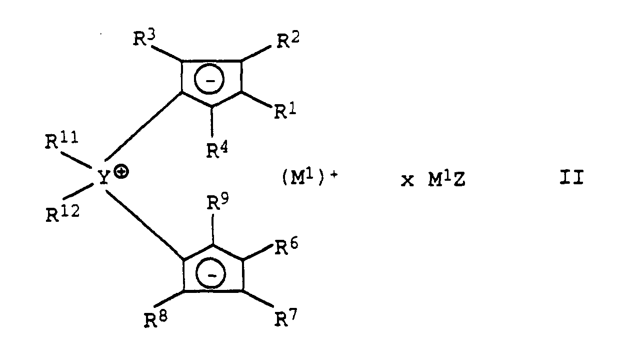 als Zwischenprodukte auftreten. Bezüglich der bevorzugten Substituenten R¹ bis R⁴ und R⁶ bis R⁹ sowie R¹¹ und R¹², Y und Z gilt das bei den Metallocenkomplexen I Gesagte. M¹ steht für ein Alkalimetall, vorzugsweise für Lithium oder Kalium.

Ein bevorzugtes Verfahren zur Herstellung der Metallocenkomplexe I und somit auch zur Herstellung der Ligandensysteme II ist folgendes:
Verbindungen der allgemeinen Formel VI 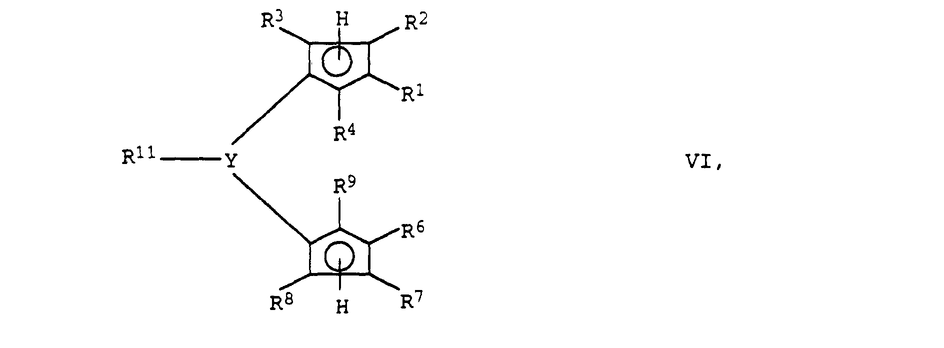 die an sich bekannt sind oder nach an sich bekannten Verfahren hergestellt werden können, wie in Köpf et al., Monatshefte für Chemie 114 (1983), S. 243-247 beschrieben, werden mit geeigneten metallierenden Agenzien wie Alkalihydriden oder -alkylen, bevorzugt n-Butyllithium, Methyllithium oder Kaliumhydrid umgesetzt. Dies kann ebenfalls nach dem in Köpf et al., Monatshefte für Chemie 114 (1983), S. 243-247 beschriebenen Verfahren durchgeführt werden. Somit erhält man Verbindungen der allgemeinen Formel III 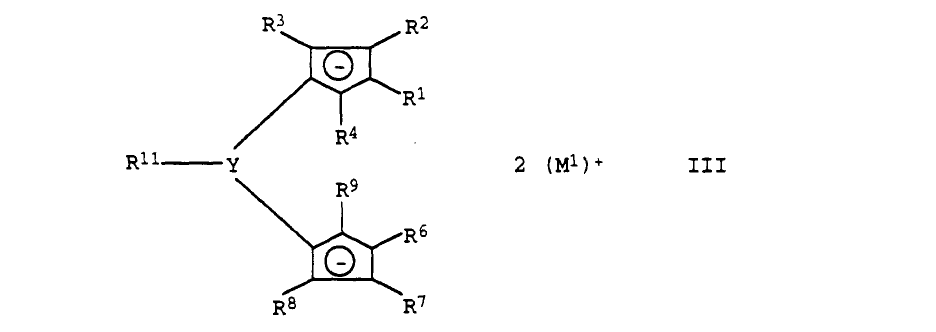 Diese Verbindungen der allgemeinen Formel III können nun mit einem quaternisierenden Agens der allgemeinen Formel IV

R¹²-Z IV,

wobei Methyljodid besonders bevorzugt ist, zu den Ligandensystemen II umgesetzt werden. Die Reaktionsbedingungen sind an sich nicht kritisch. Vorzugsweise wird III mit organischen Lösungsmitteln wie Ethern oder aromatischen Kohlenwasserstoffen, bevorzugt Toluol versetzt und auf Temperaturen von -80°C bis 0°C gekühlt. Dann wird das quaternisierende Agens IV hinzugegeben und auf Raumtemperatur erwärmt.

Vorzugsweise wird das Ligandensystem II nicht isoliert, sondern gleich in Lösung mit einer Metallverbindung der allgemeinen Formel V

MXₙ₊₂ V

umgesetzt, wobei die erfindungsgemäßen Metallocenkomplexe I entstehen.

Die Reaktionsbedingungen zur Herstellung der Metallocenkomplexe I sind ebenfalls nicht kritisch; man arbeitet bevorzugt so, daß die Lösung von II auf Temperaturen von -80°C bis 0°C gekühlt und zu der Metallverbindung V hinzugegeben wird. Nach Erwärmen auf Raumtemperatur wird der entstandene Metallocenkomplex I getrocknet und beispielsweise mit Pentan gewaschen.

Die erfindungsgemäßen Metallocenkomplexe I können als Katalysatoren zur Polymerisation von Alkenen, insbesondere von Alk-1-enen, verwendet werden.

Darunter werden Homo- und Copolymerisate von C₂- bis C₁₀-Alk-1-enen verstanden, wobei als Monomere vorzugsweise Ethylen, Propylen, But-1-en, Pent-1-en und Hex-1-en verwendet werden.

Aber auch Cycloolefine oder höhere Alk-1-ene sowie generell Alkene lassen sich als Monomere zur Homo- oder Copolymerisation .einsetzen.

Die Herstellung der Polymerisate kann in den üblichen für die Polymerisation von Alkenen verwendeten Reaktoren entweder diskontinuierlich oder bevorzugt kontinuierlich durchgeführt werden. Geeignete Reaktoren sind u.a. kontinuierlich betriebene Schleifenreaktoren oder Rührkessel, wobei man gegebenenfalls auch eine Reihe von mehreren hintereinander geschalteten Rührkesseln verwenden kann oder auch Hochdruckautoklaven oder Hochdruckrohrreaktoren.

Die Polymerisationsbedingungen sind an sich unkritisch, Drücke von 0,5 bis 3500 bar, vorzugsweise 1 bis 50 bar und Temperaturen von -60°C bis +200°C haben sich als geeignet erwiesen.

Polymerisationsreaktionen mit Hilfe der erfindungsgemäßen Metallocenkomplexe I lassen sich in Masse, in der Gasphase, in einer Suspension und in inerten Lösungsmitteln durchführen. Als Suspensions- bzw. Lösungsmittel eignen sich Kohlenwasserstoffe, bevorzugt C₄- bis C₁₀-Alkane.

Üblicherweise werden zur Aktivierung von Metallocenkomplexen metalloceniumionenbildende Verbindungen wie Lewis-Säuren, Brönsted-Säuren oder Alumoxane wie Methylalumoxane verwendet.

Weiterhin zeichnen sich die erfindungsgemäßen Metallocenkomplexe I dadurch aus, daß das Brückenelement nicht in Wechselwirkung mit dem Metall des Metallocenkomplexes tritt. Zusätzlich ergeben sich keine Wechselwirkungen mit den üblicherweise bei Olefinpolymerisationen eingesetzten Lewis-Säuren wie z.B. Aluminiumalkylen oder Boralkylen, die zu einer Desaktivierung des Katalysators führen können.

### Beispiele

### Beispiel 1

Herstellung von [P,P-Dimethyl-1,1'-phosphoniumdiyl-bis(2-methyl-4-tert.butylcyclopentadienyl)-zirkoniumdichlorid]-jodid I1

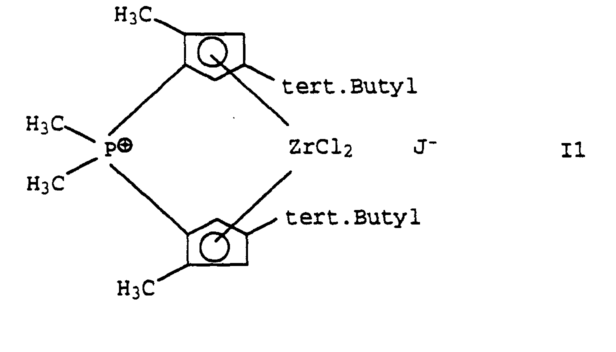

### a) Herstellung des Ligandensystems Lithium-P,P-dimethyl-bis(2-methyl-4-tert.butylcyclopentadienyl)phosphonium x Lithiumjodid II1

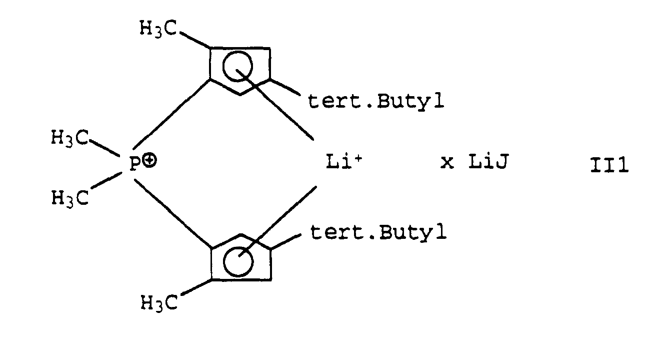

4,85 g Methyl-3-tert.butylcyclopentadienyllithium (34 mmol) wurden in einer Lösung von 30 ml THF (Tetrahydrofuran) und 10 ml Pentan suspendiert. Zu dieser Suspension wurde langsam eine Lösung von 1,5 ml Dichlormethylphosphin (16 mmol) in 6 ml THF bei -40°C getropft. Die zunächst organgefarbene Suspension ließ man über Nacht auf Raumtemperatur erwärmen. Anschließend wurde das Reaktionsgemisch am Hochvakuum trockengezogen, das entstandene Methylbis(2-methyl-4-tert.butylcyclopentadienyl)phosphin VI1 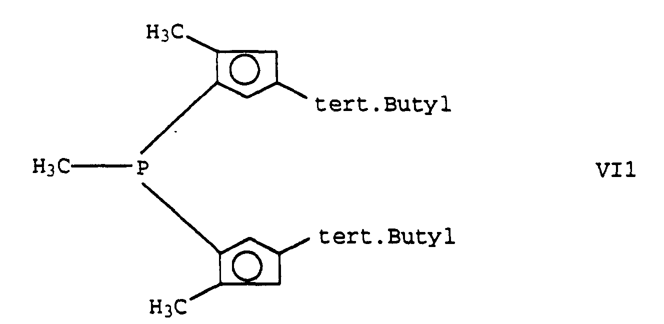 in Pentan aufgenommen und durch Filtration vom Lithiumchlorid abgetrennt.

¹H-NMR (CDCl₃):

| δ (ppm) | Aufspaltung, Intensität | Zuordnung |
|---|---|---|
| 6,21; 6,00; 5,77; 5,60 | m, 2H | olef. Cp-H |
| 3,01 | m, 4H | aliphat. Cp-H |
| 2,09-2,05 | mehrere s, 6H | Cp-Me |
| 1,38; 1,21 | d, 3H | P-Me, J² (P,H) = 2,4 Hz |
| 1,25-1,10 | mehrere s, 18H | Cp-tert.Butyl |

Zu einer Lösung von 5,06 g Methylbis(2-methyl-4-tert.butylcyclopentadienyl)phosphin VI1 (16 mmol) in Pentan wurden bei -50°C 12,8 ml einer 2,5 molaren Lösung von n-Butyllithium in Hexan (32 mmol) getropft. Man ließ das Reaktionsgemisch über Nacht auf Raumtemperatur erwärmen und engte es auf die Hälfte ein. Man erhielt Dilithiummethylbis(2-methyl-4-tert.butylcyclopentadienyl)phosphin III1, 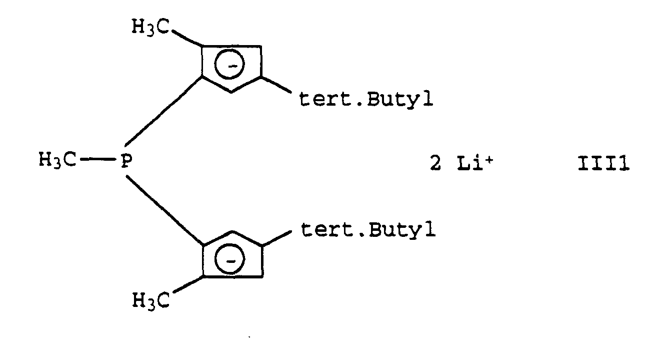 ein gelbes, voluminöses Produkt.

Die überstehende Lösung wurde abgetrennt, der Feststoff mit wenig kaltem Pentan gewaschen und am Hochvakuum trockengezogen.

Ausbeute: 3,92 g (12 mmol) = 75 % bezüglich des Methyl-3-tert.butyllithium.

Eine Suspension von 0,98 g Dilithiummethylbis(2-methyl-4-tert.butylcyclopentadienyl)phosphin III1 (2,98 mmol) in Toluol wurde bei -10°C in drei Portionen mit 0,5 ml Methyliodid (8 mmol) versetzt. Anschließend ließ man über Nacht auf Raumtemperatur erwärmen. Es entstand eine gelbe Suspension. Man ließ den weißen Feststoff absetzen und trennte die überstehende Toluollösung ab. Das entstandene Ligandensystem Lithium-P,P-dimethylbis(2-methyl-4-tert.butylcyclopentadienyl)phosphonium x Lithiumjodid II1 wurde nicht isoliert, sondern gleich in Lösung weiter umgesetzt.

¹H-NMR (CDCl₃) :

| δ (ppm) | Aufspaltung, Intensität | Zuordnung |
|---|---|---|
| 5,97 | m, 4H | Cp-H |
| 2,34 | quart. 6H | Cp-Me |
| 2,07 | d, 6H | P-Me, J² (P,H) = 13,5Hz |
| 1,25 | s, 18H | Cp-tert.Butyl |

### b) Umsetzung von II1 zu I1

Eine Lösung von 1 g Lithium-P,P-dimethylbis(2-methyl-4-tert.butylcyclopentadienyl)phosphonium x Lithiumjodid II1 (2,98 mmol) in Toluol wurde auf -10°C abgekühlt. Diese wurde zu 0,7 g ZrCl₄ (2,98 mmol) gegeben. Bei Zugabe des Ligandsalzes färbte sich die Reaktionsmischung schlagartig sonnengelb. Man ließ über Nacht auf Raumtemperatur erwärmen. Der Feststoff wurde am Hochvakuum trockengezogen und mit Pentan gewaschen. Der Metallocenkomplex I1 ließ sich nicht vom entstandenen Lithiumchlorid abtrennen.

¹H-NMR (CDCl₃):

| δ (ppm) | Aufspaltung, Intensität | Zuordnung |
|---|---|---|
| 6,82; 6,72; 6,42; 6,04 | m, 4H | Cp-H |
| 3,42; 3,22; 3,03 | 3 überlagerte d, 6H | P-Me, J² (P,H) = 15Hz |
| 2,38; 2,34 | 2 s, 6H | Cp-Me |
| 1,35; 1,32 | 2 s, 18H | Cp-tert.Butyl |

MS (FAB):

| Fragment | m/e | Intensität |
|---|---|---|
| M⁺-ZrCl₄ | 331 | 100 % |

### Beispiel 2

### Herstellung von Polypropylen

Zu einer Suspension von 12 mg des Gemisches.aus Verbindung I1 und Lithiumchlorid als Übergangsmetallkomponente in 20 ml Toluol wurden 20 ml toluolische Methylalumoxanlösung (1,53 molar, Fa. Witco) bei Raumtemperatur zugegeben und die entstandene gelborange Lösung für 30 min voraktiviert. Diese Lösung wurde in einen 1 1-Glasautoklaven, befüllt mit 500 ml trockenem Toluol, überführt. Anschließend wurde bei Raumtemperatur unter Rühren Propylen bis zu einem Druck von 2 bar aufgepreßt. Dieser Druck wurde für insgesamt 4 Stunden durch weitere Zudosierung von Propylen aufrecht erhalten. Anschließend wurde der Autoklav entspannt und die erhaltene Mischung in ein Gemisch aus 700 ml Methanol und 30 ml HCl (konz.) gegossen. Der Niederschlag wurde abfiltriert und mit 50 ml Methanol gewaschen und anschließend für 8 h bei 60°C/1 mbar im Vakuumtrockenschrank getrocknet. Es wurden 52,7 g Homopolypropylen erhalten mit einem Schmelzpunkt von Tm = 151,2°C und einem Molekulargewicht charakterisiert durch den Gewichtsmittelwert von Mw = 42500 und den Zahlenmittelwert von Mn = 19800, womit Mw/Mn = 2,15 betrug.

### Vergleichsbeispiel V1:

Herstellung von P-Methyl-1,1'-phosphindiylbis(2-methyl-4-tert.-butylcyclopentadienyl)zirkondichlorid VII1: 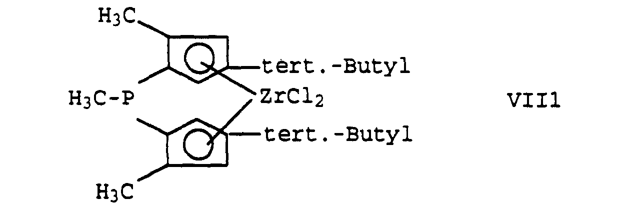 0,52 g Dilithiummethylbis(2-methyl-4-tert.butylcyclopentdienyl)phosphin (1,6 mmol) III1 wurden mit 0,37 g ZrCl₄ (1,6 mmol) vermischt und mit Toluol versetzt. Es wurde über Nacht bei Raumtemperatur gerührt. Das Reaktionsgemisch wurde zur Trockene eingeengt, der Komplex in Pentan aufgenommen und durch Filtration vom entstandenen Lithiumchlorid befreit. Die grüne Pentanlösung wurde am Hochvakuum getrocknet; es blieb ein fluoreszierend gelber Feststoff zurück.

Ausbeute: 0,41 g (0,86 mmol) = 54 % bezüglich des Dilithiumsalzes
¹H-NMR (CDCl₃):

| δ (ppm) | Aufspaltung, Intensität | Zuordnung |
|---|---|---|
| 6,51; 6,29; 5,87; 5,71; 5,57 | m, 4H | Cp-H |
| 2,3-2,2 | mehrere s, 6H | Cp-Me |
| 1,97; 1,81 | d, 3H | P-Me, J² (P,H) = 5 Hz |
| 2,4-1,2 | mehrere s, 18H | Cp-tert.Butyl |

### Vergleichsbeispiel V2:

### Herstellung von Polypropylen

Beispiel 2 wurde wiederholt mit dem Unterschied, daß 8,2 mg (17,2 µmol) der Verbindung VII1 als Übergangsmetallkomponente eingesetzt wurde. Es konnte kein Polymer isoliert werden.

Der Gewichtsmittelwert Mw und der Zahlenmittelwert Mn in Beispiel 2 wurden durch Gelpermeationschromatographie, der Schmelzpunkt Tm mittels DSC (differential scanning calorimetry) bestimmt.

## Patentansprüche

1. Metallocenkomplexe der allgemeinen Formel I 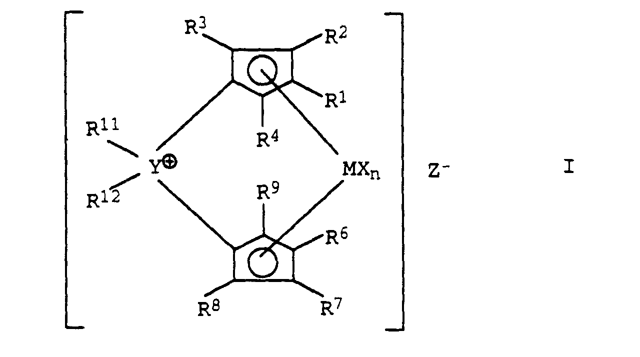 in der die Substituenten folgende Bedeutung haben:
M ein Metall aus der III., IV., V. oder VI. Nebengruppe des Periodensystems der Elemente oder ein Metall aus der Gruppe der Lanthaniden,
X Fluor, Chlor, Brom, Iod, Wasserstoff, C₁- bis C₁₀-Alkyl, C₆- bis C₁₅-Aryl oder -OR⁵,
wobei R⁵ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R⁴ und R⁶ bis R⁹ Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
R¹⁰ C₁- bis C₁₀-Alkyl, C₆- bis C₁₅-Aryl oder C₃- bis C₁₀-Cycloalkyl,
Y Stickstoff, Phosphor, Arsen, Antimon oder Wismut,
R¹¹, R¹² Wasserstoff, C₁- bis C₁₀-Alkyl, C₃- bis C₁₀-Cycloalkyl oder C₆- bis C₁₅-Aryl,
n 0, 1 oder 2 und
Z⁻ Halogenide, Carboxylate, monosubstituierte Sulfonate, Borate oder Alkoholate.

2. Ligandensysteme der allgemeinen Formel II 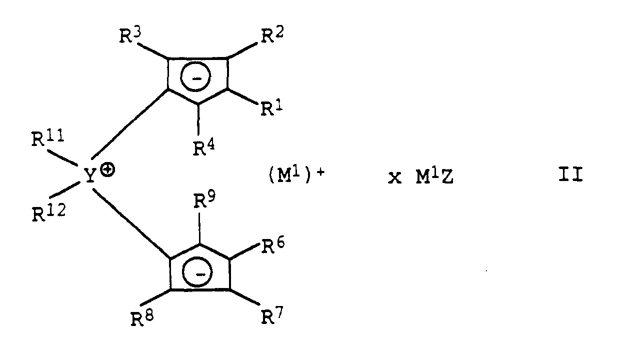 in der die Substituenten folgende Bedeutung haben:
R¹ bis R⁴ und R⁶ bis R⁹ Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
R¹⁰ C₁- bis C₁₀-Alkyl, C₆- bis C₁₅-Aryl oder C₃- bis C₁₀-Cycloalkyl,
Y Stickstoff, Phosphor, Arsen, Antimon oder Wismut,
R¹¹, R¹² Wasserstoff, C₁- bis C₁₀-Alkyl, C₃- bis C₁₀-Cycloalkyl oder C₆- bis C₁₅-Aryl,
Z Halogenide, Carboxylate, monosubstituierte Sulfonate, Borate oder Alkoholate und
M¹ ein Alkalimetall.

3. Verfahren zur Herstellung von Ligandensystemen II gemäß Anspruch 2, dadurch gekennzeichnet, daß man Verbindungen der allgemeinen Formel III 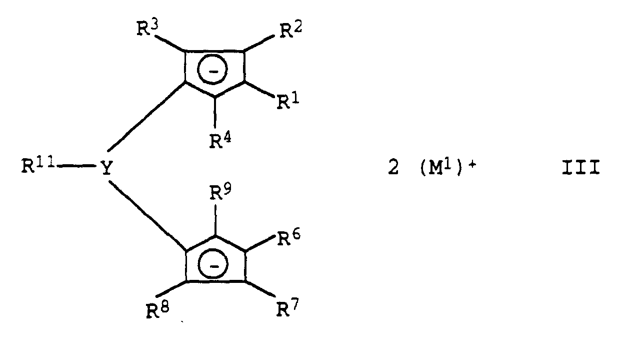 mit einem quaternisierenden Agens der allgemeinen Formel IV
R¹²-Z IV,
umsetzt.

4. Verfahren zur Herstellung von Metallocenkomplexen I gemäß Anspruch 1, dadurch gekennzeichnet, daß man Ligandensysteme der allgemeinen Formel II mit einer Metallverbindung der allgemeinen Formel V
MXₙ₊₂ V
umgesetzt.

5. Verwendung von Ligandensystemen gemäß Anspruch 2 zur Herstellung von Metallocenkomplexen I.

6. Verwendung von Metallocenkomplexen I gemäß Anspruch 1 als Katalysatoren zur Polymerisation von Alkenen.

## Claims

1. A metallocene complex of the formula I 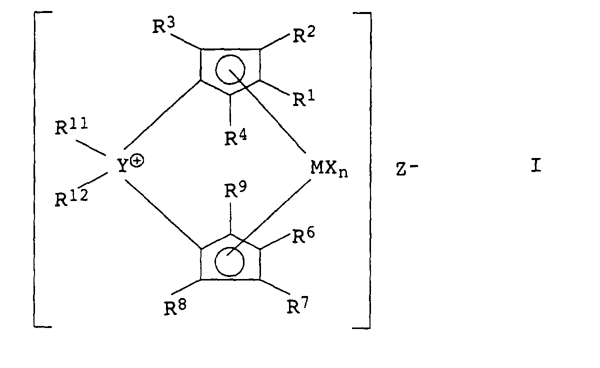 where the substituents have the following meanings:
M is a metal of transition group III, IV, V or VI of the Periodic Table of the Elements or a metal of the lanthanide group,
X is fluorine, chlorine, bromine, iodine, hydrogen, C₁-C₁₀-alkyl, C₆-C₁₅-aryl or -OR⁵,
where R⁵ is C₁-C₁₀-alkyl, C₆-C₁₅-aryl, alkylaryl, arylalkyl, fluoroalkyl or fluoroaryl each having from 1 to 10 carbon atoms in the alkyl radical and from 6 to 20 carbon atoms in the aryl radical,
R¹ to R⁴ and R⁶ to R⁹ are hydrogen, C₁-C₁₀-alkyl, 5- to 7-membered cycloalkyl which may in turn bear C₁-C₁₀-alkyls as substituents, C₆-C₁₅-aryl or arylalkyl, where two adjacent radicals may also together form a cyclic group having from 4 to 15 carbon atoms, or Si(R¹⁰)₃ where
R¹⁰ is C₁-C₁₀-alkyl, C₆-C₁₅-aryl or C₃-C₁₀-cycloalkyl,
Y is nitrogen, phosphorus, arsenic, antimony or bismuth,
R¹¹, R¹² are hydrogen, C₁-C₁₀-alkyl, C₃-C₁₀-cycloalkyl or C₆-C₁₅-aryl,
n is 0, 1 or 2 and
Z⁻ is a halide, carboxylate, monosubstituted sulfonate, borate or alkoxide.

2. A ligand system of the formula II 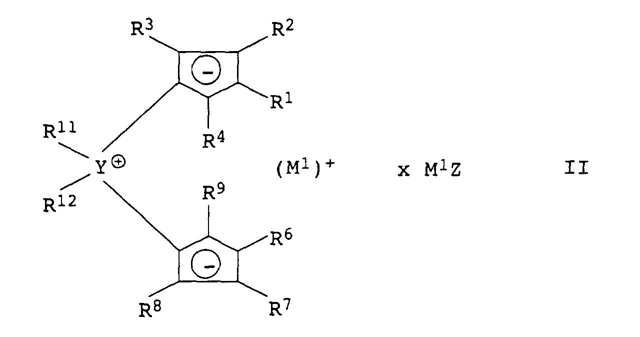 where the substituents have the following meanings:
R¹ to R⁴ and R⁶ to R⁹ are hydrogen, C₁-C₁₀-alkyl, 5- to 7-membered cycloalkyl which may in turn bear C₁-C₁₀-alkyls as substituents, C₆-C₁₅-aryl or arylalkyl, where two adjacent radicals may also together form a cyclic group having from 4 to 15 carbon atoms, or Si(R¹⁰)₃ where
R¹⁰ is C₁-C₁₀-alkyl, C₆-C₁₅-aryl or C₃-C₁₀-cycloalkyl,
Y is nitrogen, phosphorus, arsenic, antimony or bismuth,
R¹¹, R¹² are hydrogen, C₁-C₁₀-alkyl, C₃-C₁₀-cycloalkyl or C₆-C₁₅-aryl,
z is a halide, carboxylate, monosubstituted sulfonate, borate or alkoxide and
M¹ is an alkali metal.

3. A process for preparing a ligand system II as claimed in claim 2, which comprises reacting a compound of the formula III 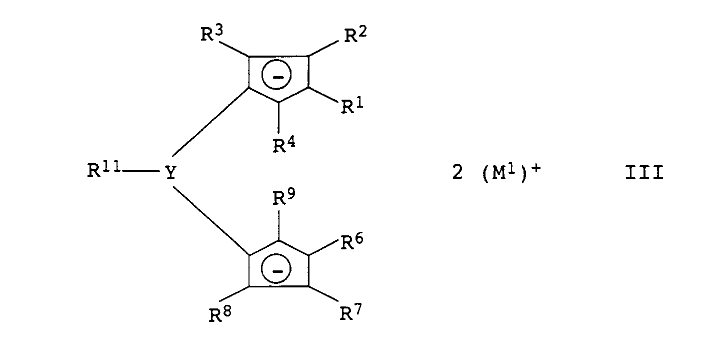 with a quaternizing agent of the formula IV
R¹²-Z IV.

4. A process for preparing a metallocene complex I as claimed in claim 1, which comprises reacting a ligand system of the formula II with a metal compound of the formula V
MXₙ₊₂ V.

5. The use of ligand systems as claimed in claim 2 for preparing metallocene complexes I.

6. The use of metallocene complexes I as claimed in claim 1 as catalysts for the polymerization of alkanes.

## Revendications

1. Complexes métallocènes de la formule générale I 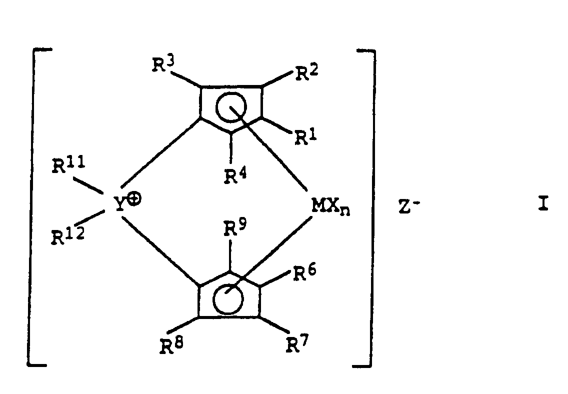 dans laquelle les substituants ont les significations suivantes:
M représente un métal des sous-groupes III, IV, V ou VI du système périodique des éléments ou un métal de la série des lanthanides,
x représente du fluor, du chlore, du brome, de l'iode, de l'hydrogène, un radical alkyle en C₁ à C₁₀, aryle en C6 à C₁₅ ou -OR⁵,
où R⁵ représente un radical alkyle en C₁ à C₁₀, aryle en C₆ à C₁₅, alkylaryle, arylalkyle, fluoroalkyle ou fluoroaryle avec à chaque fois de 1 à 10 atomes de carbone dans le radical alkyle et de 6 à 20 atomes de carbone dans le radical aryle,
R¹ à R⁴ et R⁶ à R⁹ représentent de l'hydrogène ou des radicaux alkyle en C₁ à C₁₀, cycloalkyle pentagonal à heptagonal, qui peuvent de leur côté porter des radicaux alkyle en C₁ à C₁₀ en tant que substituants, arylalkyle ou aryle en C₆ à C₁₅, où deux restes voisins peuvent éventuellement aussi représenter des groupes cycliques comportant de 4 à 15 atomes de carbone, ou Si(R¹⁰)₃, avec
R¹⁰ représentant un radical alkyle en C₁ à C₁₀, aryle en C6 à C₁₅ ou cycloalkyle en C₃ à C₁₀,
Y représente de l'azote, du phosphore, de l'arsenic, de l'antimoine ou du bismuth.
R¹¹, R¹² représentent de l'hydrogène ou un radical alkyle en C₁ à C₁₀, cycloalkyle en C₃ à C₁₀ ou aryle en C₆ à C₁₅,
n est égal à 0, 1 ou 2 et
Z- est un radical halogénure, carboxylate, sulfonate monosubstitué, borate ou alcoolate.

2. Systèmes ligands de la formule générale II 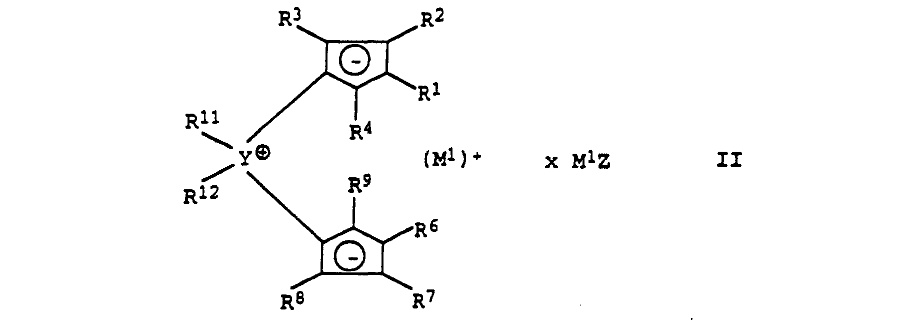 dans laquelle les substituants ont les significations suivantes:
R¹ à R⁴ et R⁶ à R⁹ représentent de l'hydrogène ou des radicaux alkyle en C₁ à C₁₀, cycloalkyle pentagonal à heptagonal, qui peuvent de leur côté porter des radicaux alkyle en C₁ à C₁₀ en tant que substituants, aryle en C₆ à C₁₅ ou arylalkyle, où deux restes voisins peuvent également représenter éventuellement des groupes cycliques comportant de 4 à 15 atomes de carbone, ou Si(R¹⁰)₃, avec
R¹⁰ représentant un radical alkyle en C₁ à C₁₀, aryle en C₆ à C₁₅ ou cycloalkyle en C₃ à C₁₀,
Y représente de l'azote, du phosphore, de l'arsenic, de l'antimoine ou du bismuth,
R¹¹, R¹² représentent de l'hydrogène ou un radical alkyle en C₁ à C₁₀, cycloalkyle en C₃ à C₁₀ ou aryle en C₆ à C₁₅,
Z est un radical halogénure, carboxylate, sulfonate monosubstitué, borate ou alcoolate et
M¹ est un métal alcalin.

3. Procédé de préparation de systèmes ligands II selon la revendication 2, caractérisé en ce que l'on fait réagir des composés de la formule générale III 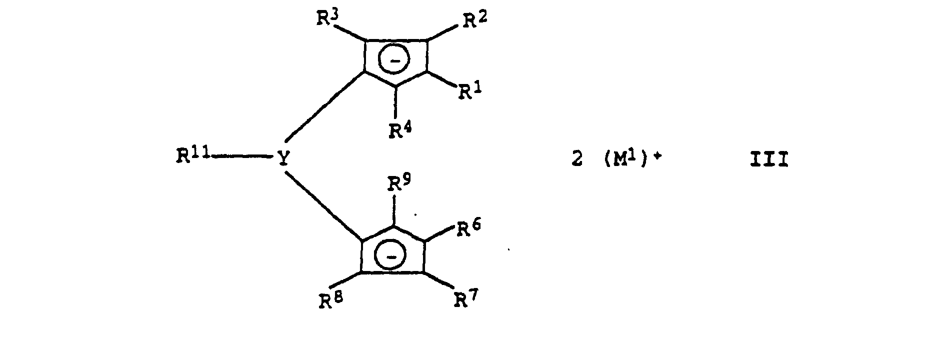 avec un agent de quaternisation de la formule générale IV
R¹²-Z IV.

4. Procédé de préparation de complexes métallocènes I selon la revendication 1, caractérisé en ce que l'on fait réagir des systèmes ligands de la formule générale II avec un composé métallique de la formule générale V
MXₙ₊₂ V.

5. Utilisation de systèmes ligands selon la revendication 2 pour la préparation de complexes métallocènes I.

6. Utilisation de complexes métallocènes I selon la revendication I comme catalyseurs pour la polymérisation d'alcènes.
